# EUROPÄISCHE PATENTSCHRIFT

(11) **EP 0 850 732 B1**
(45) Veröffentlichungstag und Bekanntmachung des Hinweises auf die Patenterteilung: **10.07.2002**
(21) Anmeldenummer: 97122472.0
(22) Anmeldetag: 19.12.1997
(51) Int. Cl.: B26D 1/04, B26D 5/12, B29D 30/46

(54) **Verfahren und Vorrichtung zum Ablängen eines unvulkanisierten Kautschukprofiles mittels einer Schneide**
Method and apparatus for sectioning uncured rubber profiles with a blade
Méthode ainsi que dispositif pour sectionner un profilé en caoutchouc non-vulcanisé avec une lame

(30) Priorität: 24.12.1996 DE 19654408
(43) Veröffentlichungstag der Anmeldung: 01.07.1998
(73) Patentinhaber: Continental Aktiengesellschaft, 30165 Hannover (DE)
(72) Erfinder: Dr. Röthemeyer, Fritz, 30916 Isernhagen (DE); Sergel, Horst, 30657 Hannover (DE); Kranz, Harald, 31008 Elze (DE); Glinz, Michael, 31535 Neustadt (DE); Homt, Günter, 30823 Garbsen (DE)

(56) Entgegenhaltungen:
- EP-A- 0 220 646
- EP-A- 0 329 130
- EP-A- 0 701 886
- EP-A- 0 714 740
- FR-A- 2 458 497
- US-A- 3 789 712

## Beschreibung

Die Erfindung bezieht sich auf ein Verfahren gemäß dem Oberbegriff des Patentanspruches 1 und eine Vorrichtung gemäß dem Oberbegriff des Patentanspruches 9. Das Verfahren und die Vorrichtung dienen zum Ablängen eines streifenartigen Profiles aus unvulkanisierter Kautschukmischung mittels einer Schneide (siehe EP-A-0 714 740).

Die Unvulkanisiertheit des Kautschukes bedingt ein im wesentlichen plastisches Deformationsverhalten unter Last. Gerade diese Eigenschaft wird beim Formgeben eines Kautschukartikels ausgenutzt. Bei den Artikeln, wo die Formgebung einerseits und die Vulkanisation andererseits im gleichen Werkzeug - üblicherweise als Vulkanisationsform bezeichnet - erfolgt, wird die Vulkanisationsgeschwindigkeit durch die Dosierung von Vulkanisationsbeschleunigern und ggf. antagonistisch wirkenden Vulkanisationsverzögerern und durch die Temperaturführung so eingestellt, dass während der ersten Sekunden bis wenigen Minuten nach dem Einbringen des konfektionierten Rohlings, insbesondere während des Schließens der Form und ggf. der Blähung des Rohlings, die Vulkanisation kaum in Gang kommt, der Kautschuk also im wesentlichen plastisch bleibt; so ist zum Beispiel in einem Fahrzeugreifen die hochgenaue Einprägung eines Laufstreifenprofiles möglich. Erst nach Abschluss der Prägung schreitet bei noch geschlossener Form die Vulkanisation so weit fort, dass die eingesetzten Kautschukmischungen zu Gummi werden, also ihre Plastizität zugungsten steigender Elastizität stark mindern. Die Rückprallelastizitäten moderner Laufstreifenmischungen betragen nach ihrer Vulkanisation etwa 70 %.

Eine Schneide ist eine scharfe Kante, an der zwei ebene oder schwach gewölbte Flächen einer Klinge mit einem über der Bogenlänge der Schneide im wesentlichen konstanten Winkel, dem Schliffwinkel, aufeinander treffen. Ein Messer ist ein Werkzeug zum Trennen, welches eine Klinge enthält plus mindestens einem weiteren Bauteil anderer Funktion, z. B. einen Handgriff, eine Befestigungsvorrichtung, einen Motor oder dergleichen.

Zur Konfektion der zugehörigen Rohlinge sind diverse streifenartige, unvulkanisierte Profile abzulängen, zum Beispiel Laufstreifen. Besonders bei unverstärkten, also keine Festigkeitsträger wie Fäden oder Seile enthaltenden, Kautschukstreifen ist das Problem bekannt, dass die Schnittwiderstandskraft (cutting reaction force) des zu schneidenden Gutes, die der betragsgleichen Schneidenvorschubkraft entgegengesetzt orientiert ist, zu einer bleibenden Deformation des zu schneidenden Gutes zu beiden Seiten der erzeugten Schnittkante führt, die im weiteren Produktionsprozess die Fügung der verschiedenen Bauteile aneinander erschwert und die Präzision des Endproduktes beeinträchtigt.

Bekanntlich ist auch durch Einsatz einer scheibenförmigen, hochtourig rotierenden statt einer rein translatorisch zu bewegenden Schneide die Schnittwiderstandskraft senkbar (siehe zum Beispiel EP-A-0 701 886). Bei ausreichend kleiner Vorschubgeschwindigkeit im Verhältnis zur Umfangsgeschwindigkeit (= 2 x pi x Messerdrehzahl) ergeben sich erfreulich saubere Schnittkanten; dabei ist allerdings zu beobachten, dass eventuell auf der Oberseite anhaftende Verunreinigungen von dem Messer mit rotierender Klinge auf die soeben durch das Schneiden frisch erzeugte und damit besonders klebewillige Streifenstirnfläche befördert werden und dort verbleiben; dies beeinträchtigt die Haftfestigkeit am fertigen Produkt. Darüber hinaus sind Schneidvorrichtungen mit rotierender Klinge recht teuer und störanfällig.

Aufgabe der Erfindung ist die Angabe eines Verfahrens zum Ablängen, welches von oben beschriebenen Nachteilen frei ist; insbesondere muss die bleibende Verformung des abzulängenden Gutes infolge des Ablängens vernachlässigbar klein und eine Schmutzbeförderung von der Oberseite des zu schneidenden Profiles auf die geschnittene Stirnfläche ausgeschlossen werden.

Weiterhin erwünscht ist eine besonders zuverlässige Funktion im Dauereinsatz in der Serienfertigung von Gummiprodukten, insbesondere in der Herstellung von Fahrzeugluftreifen, ganz besonders beim Ablängen des Laufstreifens.

Die Aufgabe wird erfindungsgemäß gelöst durch ein Verfahren nach Anspruch 1. Dieses Verfahren zum Ablängen eines unvulkanisierten Kautschukprofiles mittels einer Schneide ist dadurch gekennzeichnet, dass während des Ablängens die Geschwindigkeit zwischen der Schneide und dem abzulängenden Profil mindestens 2,5 m/s beträgt.

Während man bislang eine verbesserte Schnittqualität an unvulkanisierten Kautschukstücken durch eine Senkung der Schneidenvorschubgeschwindigkeit erreichte und beim Beschreiten dieses Weges in seiner letzten Steigerungsform die nötige Leistungsdichte zur Trennung durch eine Rotation der Schneide bereit stellte, liegt dieser Erfindung die Erkenntnis zugrunde, dass bei einer Schneidenvorschubgeschwindigkeit deutlich über dem bislang üblichen Bereich - bereits ohne jede Schneidenrotation - praktisch verformungsfreie Schnittkanten und plan geschnittene Stirnflächen zu erreichen sind.

Die Erfinder erklären sich diesen angenehmen Effekt damit, dass die Makromoleküle praktisch keine Zeit mehr finden, der fortschreitenden Schneide auszuweichen. Dadurch verhält sich das Material nicht mehr plastisch sondern spröd-elastisch.

Bei dieser Art des Trennens kommt es nach bisherigem Anschein sogar zum Zerschlagen einiger Makromoleküle des Polymeren; dieses scheint aber die in der Fügestelle erreichbare Haftfestigkeit nicht zu beeinträchtigen. Im Gegenteil weisen die bisherigen Versuchsergebnisse sogar auf eine gesteigerte Haftfestigkeit im fertigen Produkt - insbesondere Reifen - hin.

Gemäß Anspruch 2 beträgt die günstigste Schneidengeschwindigkeit während des Ablängens zwischen 4 und 12 m/s. Bei Anwendung dieser Geschwindigkeiten ist einerseits der Deformationsrest kaum noch messbar und andererseits die Vorrichtung noch ausreichend preiswert erstellbar.

Gemäß Anspruch 3 wird die Schneide vorzugsweise entlang einem Weg im wesentlichen parallel zur längsten Kante des Querschnittes des streifenartigen Profiles geführt. Hierdurch läßt sich die Erstreckung der Klinge in der Höhe und damit deren Biegebelastung und deren Masse klein halten. Dies erleichtert deren Beschleunigung - vorzugsweise mit mindestens 60 m/s² - auf die erfindungsgemäß hohe Schnittgeschwindigkeit.

Die Kürze der Klinge führt trotz eines nur geringen Flächenträgheitsmomentes der Klinge senkrecht zu ihrer Höhe zu einer ausreichenden Torsionssteifigkeit, um Torsionsschwingungen und dadurch induzierte Biegeschwingungen der Klinge so weit zu unterdrücken, dass dadurch keine störende Welligkeit in den Schnittflächen entsteht.

Vorzugsweise steht die Schneide gemäß Anspruch 4 im wesentlichen rechtwinklig zum Verschiebeweg der Schneide, um das spröd-elastische Trenn- Verhalten des unvulkanisierten Kautschuks zu maximieren. Eine leichte Neigung der Klinge kann indessen den Vorteil zeitigen, dass das abzulängende Gut durch die nach unten gerichtete Komponente der Schnittwiderstandskraft besonders fest an der Zuführvorrichtung gehalten wird. Eine solchermaßen gesteigerte Fixierung vermeidet ohne zusätzliche Haltevorrichtungen selbst bei spitzwinkligen Profilquerschnitten das Ausbeulen dieser Profilkanten beim Auftreffen der Schneide. Wird die Schneide aus erstgenannter senkrechter Stellung nur schwach geneigt, so schmälert dies die Sprödigkeit des Rennverhaltens nur wenig. Dementsprechend sollen im Zusammenhang mit der Schneidenstellung relativ zum Verfahrweg die Worte "im wesentlichen rechtwinklig" bedeuten, dass die Klinge gegenüber der senkrechten Ausrichtung der Schneide um höchstens 45° nach vorn geneigt ist, sodass der Winkel zwischen der Schneide und dem Verschiebeweg mindestens 45° beträgt.

Wegen der praktisch ausbleibenden Schnittreaktionsverformung bei Anwendung des erfindungsgemäßen Verfahrens empfiehlt sich gemäß Anspruch 5, das abzulängende Profil ohne Gegenschneide festzuhalten. Hierdurch wird die Vorrichtung nicht nur besonders preiswert sondern darüberhinaus kann die Vorrichtung nach Ausführung eines Schnittes besonders schnell wieder für den nächsten Schnitt eingesetzt werden. Die Vorrichtung erreicht also eine besonders hohe Mengenleistung.

Gemäß Anspruch 7 wird die Klinge erwärmt, damit die Klingentemperatur am Ein- und Auslauf des Schnittgutes 140°C nicht unterschreitet. Die Erwärmung der Klinge erleichtert den Schneidvorgang und erlaubt Schneidengeschwindigkeiten berunter zu 2,5 m/s. Ferner wird die Schnittqualität besonders am Einund Auslauf des Schnittgutes verbessert.

Aus der britischen Patentanmeldung Nr. 22 445 aus dem Jahre 1896 ist ein druckmittelbetätigter Linearantrieb bekannt, welcher große Massen mit geringen Geschwindigkeiten bewegen kann. Aus dem US Patent Nr. 3 673 924 aus dem Jahre 1972 ist ebenfalls ein druckmittelbetätigter Antrieb bekannt, welcher ein Paar von Quetschrollen mit dazwischen befindlichem elastischem Schlauch aufweist. Dieser elastische Schlauch wird von den beiden Quetschrollen derart zusammengequetscht, dass, wenn der Schlauch mit einem Druck beaufschlagt wird, die Quetschrollen sich vor der dann im Schlauch befindlichen Druckwelle her bewegen.

Gemäß Anspruch 8 wird die Schneide durch einen an sich bekannten druckmittelbetätigten Linearantrieb angetrieben. Dieser weist vorzugsweise einen Druckspeicher zur Einspeisung des Druckmediums in den Schlauch auf. Ein solcher Druckspeicher stellt beim Öffnen auf besonders einfache Weise genügend Druckmedium zur Verfügung, um die erforderliche hohe Schneidengeschwindigkeit- und beschleunigung mit dem druckmittelbetätigten Linearantrieb zu erreichen.

Gemäß Anspruch 6 beträgt die bevorzugte Beschleunigungsstrecke für die Schneide von seiner Ruhelage bis zum Auftreffen auf das abzulängende Profil zwischen 0,2 und 1 Meter. Mit dieser Bemessung werden die bevorzugten Schneidengeschwindigkeiten bei erträglichem Bauraum und geringem Bauaufwand erreicht. Zwecks geringen Bauaufwandes wird vorzugsweise auf einen eigenen Kompressor verzichtet, stattdessen der im Druckluftleitungsnetz üblicherweise verfügbare Luftdruck von 7 bar verwendet und es werden Schläuche nur mit üblicher Walkbelastbarkeit verwendet. Eine Verkürzung der Beschleunigungsstrecken wäre möglich bei Erhöhung des eingesetzten Luftdruckes und/oder bei weiter gehender Zusammenquetschung des Schlauches und/oder größerer Bemessung des lichten Schlauchquerschnittes.

Gemäß einer Merkmalsunterkombination des unabhängigen, auf eine Vorrichtung gerichteten Anspruches 9 ist ein Messer an einem Schlitten befestigt, wobei der Schlitten entlang einem Weg im wesentlichen parallel zur längsten Kante des Querschnittes des streifenartigen Profiles verschieblich ist, wobei dieser Verschiebeweg des Schlittens so groß ist, dass zwischen der Schlittenanfangsstellung und der ihr zugewandten Seite des Profiles ein Beschleunigungsweg (sₐ) zwischen 0,2 und 1 m zur Verfügung steht und zwischen der gegenüber liegenden Seite des Profiles und der Schlittenendstellung ein Bremsweg (s_{b}) von mindestens 0,1 m zur Verfügung steht, wobei der messertragende Schlitten im Beschleunigungsweg (sₐ) eine Geschwindigkeit von mindestens 2,5 m/s erhält. Die Schlittenbewegung in Verbindung mit der scharfen Schneide des Messers erzeugt im unvulkanisierten Kautschuk einen sauberen und präzisen Schnitt von hoher Qualität der Trennflächen.

Gemäß einem weiteren Merkmal des Anspruches 9 wird die Schneide entlang einem Weg im wesentlichen parallel zur längsten Kante des Querschnittes des streifenartigen Profiles geführt. Hierdurch läßt sich die Erstreckung der Klinge in der Höhe und damit deren Biegebelastung und deren Masse klein halten. Dies erleichtert deren Beschleunigung - vorzugsweise mit mindestens 60 m/s² - auf die erfindungsgemäß hohe Schnittgeschwindigkeit.

Die gemäß einem weiteren Merkmal des Anspruches 9 im wesentlichen rechtwinklige Stellung der Schneide zum Verschiebeweg und dadurch auch zum Schnittgut erzeugt eine besonders gute Schnittqualität, denn wenn die Schneide im wesentlichen rechtwinklig zu ihrem Verschiebeweg und damit auch zum Schnittgut steht, wird der unvulkanisierte Kautschuk in idealer Weise spröd-elastisch durchtrennt.

Gemäß einem weiteren Merkmal des Anspruches 9 wird der messertragende Schlitten in an sich bekannter Weise durch einen druckmittelbetätigten Linearantrieb angetrieben, der ein Paar von am Schlitten befestigten Quetschrollen aufweist und einen Schlauch elastischer Wandung, der zwischen den beiden Quetschrollen zusammengequetscht ist, wobei der Schlauch mit seiner Länge im wesentlichen parallel zum Schneidweg angeordnet ist, wobei an einem Ende des Schlauches ein Sperrventil angeordnet ist, dass in seiner Öffnungsstellung, die zumindest zum Einleiten des Schneidvorganges gewählt wird, die Verbindung zu einem dicht dahinter angeordneten Speicher mit einem unter Druck stehenden Fluid - vorzugsweise Luft - schafft. Mit dieser Antriebsart wird auf einfache und kostengünstige Weise die erforderliche hohe Schneidengeschwindigkeit erreicht.

Gemäß Anspruch 10 hält die Vorrichtung das Profil ohne Gegenschneide fest. Hierdurch wird die Vorrichtung nicht nur besonders preiswert sondern darüberhinaus kann die Vorrichtung nach Ausführung eines Schnittes besonders schnell wieder für den nächsten Schnitt eingesetzt werden.

Die Erfindung wird nachfolgend anhand von einer Figur näher erläutert. Sie zeigt eine Seitenansicht der Vorrichtung zum Hochgeschwindigkeits-Quertrennen von Profilen 1, welche durch Führungsschienen 9 geführt werden. Die Linearbewegung mit der erforderlichen hohen Geschwindigkeit von mindestens 2,5 m/s wird von einem druckmittelbetätigtem Linearantrieb erzeugt:

Wird der Schlauch 4 des druckmittelbetätigten Linearantriebes, wie hier gezeigt, von der rechten Seite über den Druckeinlass 4.1 durch - vorzugsweise abruptes - Öffnen des Sperrhahns 4.2 mit Druck von ca. 7 bar beaufschlagt, dann werden die beiden Quetschrollen 3.1 zu einer Abrollbewegung auf dem Schlauch 4 in Richtung der linken Schlauchseite, welche Atmospährendruck aufweist, gezwungen.

Selbst bei hohem Strömungsinnenwiderstand im Druckluft-Versorgungsnetz ist eine große Beschleunigung des Schlittens 3 möglich bei Anordnung eines Druckspeichers 5 vor dem Druckeinlass 4.1, der im Bedarfsfalle zwischengespeicherte Druckluft nach links in den Schlauch 4 des Linearantriebes ausströmen lässt; eine unerwünschte Ausströmung zwischengespeicherter Druckluft nach rechts wird zweckmäßigerweise - wie hier gezeigt - durch ein Rückschlagventil 4.4 vermieden.

Diese Bewegung in Richtung 3.2 wird für den Trennvorgang verwendet, wobei der Schlitten 3 von der Linearführung 6 geführt wird. Diese Linearführung ist zwar besonders leicht als gerade Schiene zu erstellen, kann aber auch gewöblt sein. Eine spiralartige Wölbung des Beschleunigungsweges würde eine besonders kompakte Unterbringung der erforderlichen Beschleunigungstsrecke erlauben.

Um die hohe erforderliche Klingengeschwindigkeit von mindestens 2,5 m/s erreichen zu können ist eine Beschleunigungsstrecke sₐ von 0,2 bis 1 Metern Länge bei dem genannten Überdruck erforderlich. Der Druck im Druckeinlass 4.1 wird je nach Beschleunigung und erreichter Geschwindigkeit des Schlittens 3 an geeigneter Stelle, unter Umständen noch vor Erreichen des abzulängenden Gutes, auf Atmosphärendruck reduziert. Die Messergeschwindigkeit darf während des Trennvorgangs 2,5 m/s nicht unterschreiten.

Nach dem Durchtrennen wird der Schlitten 3 innerhalb des Bremsweges s_{b} bis zum Stillstand abgebremst. Der Bremsweg s_{b} zwischen dem linken Rand des abzulängenden Profiles 1 und der Schneide 2.1 in der Ruheposition 12 sollte mindestens 0,1 m betragen. Gegebenenfalls wird der Druckauslass 4.5 mit Druck größer als dem Atmosphärendruck beaufschlagt, um den Schlitten 3 zusätzlich abzubremsen.

Die Schnittqualität besonders im Einlauf aber auch im Auslauf der Schneide in das Schnittgut wird erheblich verbessert, wenn die Klinge 2 von einer stationären Heizeinrichtung 10 so stark erwärmt wird, dass die Klingentemperatur auch am Ende des Trennweges s 140°C nicht unterschreitet. Die Erwärmung der Klinge in der gezeichneten Darstellung erfolgt, wenn sich der Schlitten 3 in der Ruheposition 11 befindet. Dies erspart eine bewegliche Energiezufuhr und verringert die zu beschleunigende Masse.

Um den Schlitten 3 leer, d.h. ohne zu schneiden, zur rechten Seite zurückzufahren und für den nächsten Schneidvorgang bereitzustellen, wird im Druckauslass 4.5 kurzzeitig der Überdruck von dieser Seite eingegeben. Zur Vermeidung eines solchen "Leerweges" ist es auch - in einer nicht gezeichneten Abwandlung vorgenannter Vorrichtung - möglich, die Klinge zusätzlich mit einer Schneide rechts auszustatten und auch links vom Schnittgut eine ausreichende Beschleunigungsstrecke vorzusehen. Dann trennt die Klinge hin- und hergehend abwechselnd mit ihrer linken und ihrer rechten Schneide.

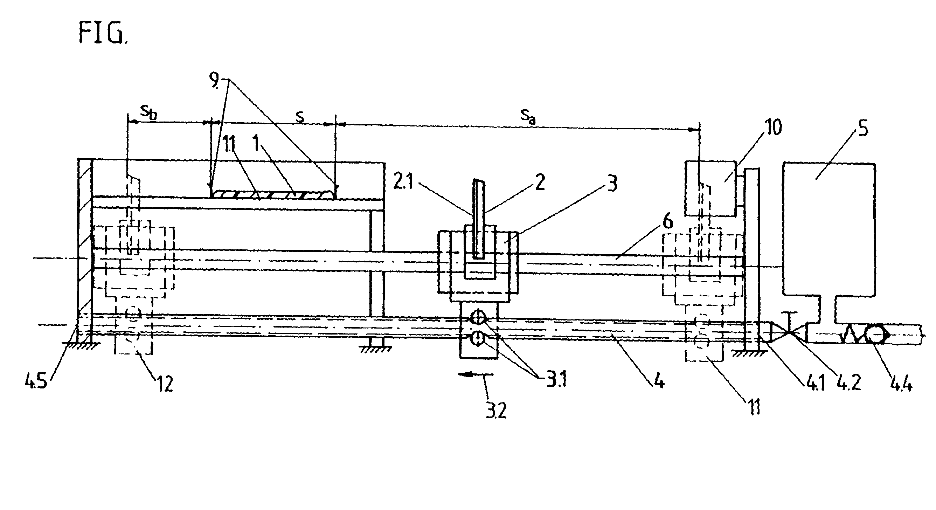

## Patentansprüche

1. Verfahren zum Ablängen eines streifenartigen Profiles (1) aus unvulkanisierter Kautschukmischung mittels einer Schneide (2.1),
**dadurch gekennzeichnet, dass** während des Ablängens die Geschwindigkeit zwischen der Schneide und dem abzulängenden Profil mindestens 2,5 m/s beträgt.

2. Verfahren nach Anspruch 1, **dadurch gekennzeichnet, dass** während des Ablängens die Geschwindigkeit zwischen Schneide (2.1) und abzulängendem Profil (1) zwischen 4 und 12 m/s beträgt.

3. Verfahren nach einem der vorangehenden Ansprüche, **dadurch gekennzeichnet, dass** die Schneide (2.1) entlang einem Weg im wesentlichen parallel zur längsten Kante (1.1) des Querschnittes des streifenartigen Profiles (1) geführt wird.

4. Verfahren nach einem der vorangehenden Ansprüche, **dadurch gekennzeichnet, dass** die Schneide (2.1) rechtwinklig zum Verfahrweg der Schneide (2.1) steht oder so gegenüber der Senkrechten zum Verfahrweg nach vorn geneigt ist, dass der Winkel zwischen der Schneide (2.1) und dem Verfahrweg mindestens 45° beträgt.

5. Verfahren nach einem der vorangehenden Ansprüche, **dadurch gekennzeichnet, dass** das abzulängende Profil (1) ohne Gegenschneide festgehalten wird.

6. Verfahren nach einem der vorangehenden Ansprüche, **dadurch gekennzeichnet, dass** die Beschleunigungsstrecke für die Schneide (2.1) von seiner Ruhelage bis zum Auftreffen auf das abzulängende Profil (1) zwischen 0,2 und 1 Meter beträgt.

7. Verfahren nach einem der vorangehenden Ansprüche, **dadurch gekennzeichnet, dass** die Schneide (2.1) auf einer Klinge (2) vorgesehen ist, und, dass die Klinge (2) erwärmt wird und die Klingentemperatur am Ein- und Auslauf des zu schneidenden Profiles (1) 140°C nicht unterschreitet.

8. Verfahren nach einem der vorangehenden Ansprüche, **dadurch gekennzeichnet, dass** die Schneide (2.1) durch einen druckmittelbetätigten Linearantrieb angetrieben wird.

9. Vorrichtung zum Ablängen eines streifenartigen Profiles (1) aus unvulkanisierter Kautschukmischung mittels einer Schneide (2.1)
- wobei ein Messer, welches eine Klinge (2) mit besagter Schneide (2.1) aufweist, an einem Schlitten (3) befestigt ist,
- wobei der Schlitten (3) einen Antrieb aufweist,
- wobei der Beschleunigungsweg (sₐ) dieses Schlittens (3) zwischen einer Schlittenanfangsstellung (11) und der ihr zugewandten Seite des Profiles (1) zwischen 0,2 und 1 m beträgt und zwischen der gegenüber liegenden Seite des Profiles (1) und einer Schlittenendstellung (12) ein Bremsweg (s_{b}) von mindestens 0,1 m zur Verfügung steht,
- wobei der Schlitten (3) entlang einem Weg im wesentlichen parallel zur längsten Kante (1.1) des Querschnittes des streifenartigen Profiles (1) verschieblich ist,
- wobei die Schneide (2.1) rechtwinklig zum Verfahrweg steht oder so gegenüber der Senkrechten zum Verfahrweg nach vorn geneigt ist, dass der Winkel zwischen der Schneide und dem Verfahrweg mindestens 45° beträgt,
**dadurch gekennzeichnet,**
- **dass** der Antrieb des messertragenden Schlittens (3) ein druckmittelbetätigter Linearantrieb ist, der ein Paar von am Schlitten (3) befestigten Quetschrollen (3.1) aufweist und einen Schlauch (4) elastischer Wandung, der zwischen den beiden Quetschrollen (3.1) zusammengequetscht ist,
- womit der messertragende Schlitten (3) im Beschleunigungsweg (sₐ) eine Geschwindigkeit von mindestens 2,5 m/s, vorzugsweise 4 bis 12 m/s, erhält,
- wobei der Schlauch (4) mit seiner Länge im wesentlichen parallel zum Beschleunigungsweg (sₐ) angeordnet ist.

10. Vorrichtung nach Anspruch 9, **dadurch gekennzeichnet, dass** sie das Profil (1) ohne Gegenschneide festhält.

11. Vorrichtung nach Anspruch 9 oder 10, **dadurch gekennzeichnet, dass** sie am Anfang des Beschleunigungsweges (sₐ) und/oder in der Schlittenanfangsstellung (11) eine ortsfeste Heizeinrichtung (10) zur Klingenaufheizung aufweist.

12. Vorrichtung nach Anspruch 11 zur Realisierung eines Verfahrens nach Anspruch 7, **dadurch gekennzeichnet, dass** die Heizeinrichtung (10) eine Temperatur von ca. 220°C aufweist.

## Claims

1. Method of cutting to length a strip-like profile (1) from a non-vulcanised rubber mixture by means of a cutting edge (2.1), **characterised in that**, during the cutting-to-length operation, the speed between the cutting edge and the profile to be cut to length is at least 2.5 m/s.

2. Method according to claim 1, **characterised in that**, during the cutting-to-length operation, the speed between cutting edge (2.1) and profile (1) to be cut to length is between 4 and 12 m/s.

3. Method according to one of the preceding claims, **characterised in that** the cutting edge (2.1) is guided along a path substantially parallel to the longest edge (1.1) of the cross-section of the strip-like profile (1).

4. Method according to one of the preceding claims, **characterised in that** the cutting edge (2.1) stands at right angles to the travel path of the cutting edge (2.1) or is so forwardly inclined relative to the vertical to the travel path that the angle between the cutting edge (2.1) and the travel path is at least 45°.

5. Method according to one of the preceding claims, **characterised in that** the profile (1) to be cut to length is retained without a counter-cutting edge.

6. Method according to one of the preceding claims, **characterised in that** the acceleration distance for the cutting edge (2.1) from its inoperative position to encountering the profile (1) to be cut to length is between 0.2 and 1 metre.

7. Method according to one of the preceding claims, **characterised in that** the cutting edge (2.1) is provided on a blade (2), and **in that** the blade (2) is heated, and the blade temperature at the inlet and outlet of the profile (1) to be cut does not fall below 140° C.

8. Method according to one of the preceding claims, **characterised in that** the cutting edge (2.1) is driven by a linear drive means which is actuated by pressure medium.

9. Apparatus for cutting to length a strip-like profile (1) from a non-vulcanised rubber mixture by means of a cutting edge (2.1),
- wherein a knife, which has a blade (2) with said cutting edge (2.1), is mounted on a sliding carriage (3),
- wherein the sliding carriage (3) has a drive means,
- wherein the acceleration path (sₐ) of this sliding carriage (3) between an initial sliding carriage position (11) and the side of the profile (1) facing said position is between 0.2 and 1 m, and a brake path (s_{b}) of at least 0.1 m is available between the oppositely situated side of the profile (1) and a final sliding carriage position (12),
- wherein the sliding carriage (3) is displaceable along a path substantially parallel to the longest edge (1.1) of the cross-section of the strip-like profile (1), and
- wherein the cutting edge (2.1) stands at right angles to the travel path or is so forwardly inclined, relative to the vertical to the travel path, that the angle between the cutting edge and the travel path is at least 45°,
**characterised in that**
- the drive means of the knife-bearing sliding carriage (3) is a linear drive means which is actuated by pressure medium, said drive means having a pair of nip rollers (3.1), which are mounted on the sliding carriage (3), and a tube (4) which has a resilient wall and is squeezed between the two nip rollers (3.1),
- wherein the knife-bearing sliding carriage (3), in the acceleration path (sₐ), is given a speed of at least 2.5 m/s, preferably 4 to 12 m/s, and
- wherein the tube (4) is disposed with its length substantially parallel to the acceleration path (sₐ).

10. Apparatus according to claim 9, **characterised in that** it retains the profile (1) without a counter-cutting edge.

11. Apparatus according to claim 9 or 10, **characterised in that** it has, at the beginning of the acceleration path (sₐ) and/or in the initial sliding carriage position (11), a stationary heating means (10) for heating-up blades.

12. Apparatus according to claim 11 for accomplishing a method according to claim 7, **characterised in that** the heating means (10) has a temperature of approx. 220° C.

## Revendications

1. Procédé pour sectionner un profilé (11) du genre d'une bande, en un mélange de caoutchouc non vulcanisé, au moyen d'un organe tranchant (2.1), **caractérisé en ce que**, pendant le sectionnement, la vitesse entre l'organe tranchant et le profilé à sectionner est d'au moins 2,5 m/s.

2. Procédé selon la revendication 1, **caractérisé en ce que**, pendant le sectionnement, la vitesse entre l'organe tranchant (2.1) et le profilé (1) à sectionner est comprise entre 4 et 12 m/s.

3. Procédé selon l'une des revendications précédentes, **caractérisé en ce que** l'organe tranchant (2.1) est guidé le long d'une trajectoire sensiblement parallèle eu côté (1.1) le plus longue de la section transversale du profil (1) du genre d'une bande.

4. Procédé selon l'une des revendications précédentes, **caractérisé en ce que** l'organe tranchant (2.1) est placé à angle droit par rapport à la trajectoire de déplacement de l'organe tranchant (2.1), ou bien est incliné vers l'avant par rapport à la perpendiculaire à la trajectoire de déplacement, de manière que l'angle entre l'organe tranchant (2.1) et la trajectoire de déplacement soit au moins de 45°.

5. Procédé selon l'une des revendications précédentes, **caractérisé en ce que** le profilé (1) à sectionner est maintenu sans contre-organe tranchant.

6. Procédé selon l'une des revendications précédentes, **caractérisé en ce que** la distance d'accélération de l'organe tranchant (2.1), de sa position de repos à l'atteinte d'un profilé (1) à sectionner, est comprise entre 0,2 et 1 mètre.

7. Procédé selon l'une des revendications précédentes, **caractérisé en ce que** l'organe tranchant (2.1) est prévu sur une lame (2), et **en ce que** la lame (2) est chauffée et la température de lame à l'entrée et sortie du profilé (1) à trancher ne descend pas au-dessous de 140°C.

8. Procédé selon l'une des revendications précédentes, **caractérisé en ce que** l'organe tranchant (2.1) est entraîné au moyen d'un entraînement linéaire actionné par un fluide sous pression.

9. Dispositif de sectionnement d'un profilé (1) du genre d'une bande, en mélange de caoutchouc non vulcanisé, au moyen d'un organe tranchant (2), où
• un couteau, présentant une lame (2) ayant ledit organe tranchant (2.1), est fixé sur un chariot (3),
• le chariot (3) présente un entraînement,
• la distance d'accélération (sₐ) de ce chariot (3), entre une position initiale de chariot (11) et la face, tournée vers lui, du profilé (1), est comprise entre 0,2 et 1 mètre, et une course de freinage (s_{b}) d'au moins 0,1 mètre est laissée entre la face, opposée, du profilé (1) et une position finale de chariot (12),
• le chariot (3) étant mobile le long d'une course de déplacement, sensiblement parallèlement au côté (1.1) le plus long de la section transversale du profilé (1) du genre d'une bande,
• l'organe tranchant (2.1) étant incliné perpendiculairement par rapport à la course de déplacement ou bien incliné vers l'avant par rapport à la perpendiculaire à la course de déplacement, de manière que l'angle entre l'organe tranchant et la course de déplacement soit d'au moins 45°,
**caractérisé en ce que**
• l'entraînement du chariot (3) portant un couteau est un entraînement linéaire actionné par un fluide sous pression, qui présente une paire de galets d'écrasement (3.1) fixés sur le chariot (3), et un tuyau (4) à paroi élastique, écrasé par compression entre les deux galets d'écrasement (3.1),
• faisant que le chariot (3) portant le couteau, lors de la course d'accélération (sₐ), prend une vitesse d'au moins 2,5 m/s, de préférence de 4 à 12 m/s,
• le tuyau (4) étant disposé avec sa longueur sensiblement parallèle à la course d'accélération (sₐ).

10. Dispositif selon la revendication 9, **caractérisé en ce qu'**il maintient le profilé (1) sans utiliser de contre-organe tranchant.

11. Dispositif selon la revendication 9 ou 10, **caractérisé en ce que**, au début de la course d'accélération (sₐ) et/ou à la position initiale de chariot (11), il présente un dispositif de chauffage (10) localement fixe, devant chauffer la lame.

12. Dispositif selon la revendication 11, pour mettre en oeuvre le procédé selon la revendication 7, **caractérisé en ce que** le dispositif de chauffage (10) présente une température d'environ 220°C.
